**Europäisches Patentamt**

**European Patent Office**

**Office européen des brevets**

(11) Veröffentlichungsnummer : **0 353 411 B1**

(12) **EUROPÄISCHE PATENTSCHRIFT**

(45) Veröffentlichungstag der Patentschrift :
**19.08.92 Patentblatt 92/34**

(21) Anmeldenummer : **89109355.1**

(22) Anmeldetag : **24.05.89**

(51) Int. Cl.$^5$ : **B60H 1/18**

(54) **Heizungsanlage für ein Kraftfahrzeug mit einem luftgekühlten Heckmotor.**

(30) Priorität : **30.07.88 DE 3826022**

(43) Veröffentlichungstag der Anmeldung :
**07.02.90 Patentblatt 90/06**

(45) Bekanntmachung des Hinweises auf die
Patenterteilung :
**19.08.92 Patentblatt 92/34**

(84) Benannte Vertragsstaaten :
**DE FR GB IT**

(56) Entgegenhaltungen :
**DE-A- 1 630 919**

(56) Entgegenhaltungen :
**US-A- 1 597 113**
**US-A- 1 884 538**
**ATZ AUTOMOBILTECHNISCHE ZEITSCHRIFT.**
**vol. 77, no. 10, Oktober 1975, STUTTGART DE**
**Seite 303 "Eine neue elektronischeBehr-**
**Heizungsautomatik für luftgekühlte Kraftfahr-**
**zeuge"**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Burst, Hermann, Dipl.-Ing.**
**Telemannstrasse 4**
**W-7255 Rutesheim (DE)**

## Beschreibung

Die Erfindung bezieht sich auf eine Heizungsanlage für ein Kraftfahrzeug mit einem luftgekühlten Heckmotor gemäß dem Oberbegriff des Anspruchs 1.

Bei einer bekannten Heizungsanlage der eingangs genannten Gattung (DE-A-16 30 919) sind die mit Schalldämpfern versehenen Heizleitungen innerhalb von Aufbauteilen (Schweller) des Kraftfahrzeuges untergebracht und fest mit diesem verbunden, wobei diese Aufbauteile samt den Heizleitungen einer nachträglichen Oberflächenbehandlung unterzogen werden. Die aus Stahlrohr gefertigten Heizleitungen sind dabei mit den Aufbauteilen verschweißt. Damit z. B. bei einer Tauchlackierung kein Lack in den Schalldämpfer gelangen kann, sind die Zu- und Abströmöffnungen des Schalldämpfers mit eingesetzten Abdeckungen versehen, die nach Beenden der Oberflächenbehandlung entfernbar sind. In der Praxis hat sich gezeigt, daß trotz dieser Abdeckungen teilweise Lack in den Schalldämpfer gelangt, was zu einer störenden Geruchsbelästigung im Fahrgastraum führt. In diesen Fällen sind zeit- und kostenaufwendige Maßnahmen (z. B. Spülung des Schalldämpfers) erforderlich, um die Geruchsbelästigung wieder zu beseitigen. Ferner kann bei dieser Anordnung ein defekter Schalldämpfer nur mit sehr hohem Aufwand - Entfernen des Schwelleraußenblechs - ersetzt werden.

Aufgabe der Erfindung ist es, am Aufbau und an der Heizungsanlage solche Vorkehrungen zu treffen, daß einerseits eine einfache, kostengünstige Montage der Heizleitung sowie ein Austausch eines defekten Schalldämpfers gewährleistet ist, und daß andererseits eine Geruchsbelästigung durch den Schalldämpfer infolge der Oberflächenbehandlung des Kraftfahrzeuges vermieden wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die flexible Ausbildung eines vorgefertigten wellrohrartigen, aus einem Schalldämpfer, einem Rohrkrümmer und einem Wellrohrschlauch bestehenden Montageteiles eine einfache, kostengünstige Montage bzw. Demontage der innerhalb eines Aufbauteiles verlaufenden Heizleitung erzielt wird. Ein defekter Schalldämpfer läßt sich bei dieser Anordnung leicht und schnell auswechseln. Durch die Montage der Heizleitung nach der Oberflächenbehandlung kann der Lack erst gar nicht mit dem Schalldämpfer in Berührung kommen und so auch keine Geruchsbelästigung hervorrufen. Durch die in den Fahrzeuglängsträger eingeführten Federklammern wird der Schalldämpfer in seiner Einbaulage fixiert. Der am hinteren Ende des Wellrohrschlauches angeordnete Endstutzen ermöglicht ein leichtes Einhängen des Stahlseiles sowie eine einfache Verbindung zwischen dem Wellrohrschlauch und dem hinteren Übergangsstück.

Ein Ausführungsbeispiel der Erfindung ist in der Zeichnung dargestellt und wird im folgenden näher erläutert. Es zeigt

Fig. 1 eine Seitenansicht auf ein Kraftfahrzeug mit einer Heizungsanlage,

Fig. 2 einen Längsschnitt durch die Heizleitung in gestreckter Lage und in größerem Maßstab,

Fig. 3 einen Schnitt nach der Linie III-III der Fig. 1 in größerem Maßstab,

Fig. 4 eine Einzelheit X der Fig. 1 in größerem Maßstab, teilweise im Schnitt,

Fig. 5 eine Ansicht in Pfeilrichtung T der Fig. 2 in größerem Maßstab,

Fig. 6 eine Schrägansicht von vorn auf den Bugbereich des Kraftfahrzeugs,

Fig. 7 eine Ansicht in Pfeilrichtung R der Fig. 2 in größerem Maßstab und

Fig. 8 einen Schnitt nach der Linie VIII-VIII der Fig. 2 in größerem Maßstab.

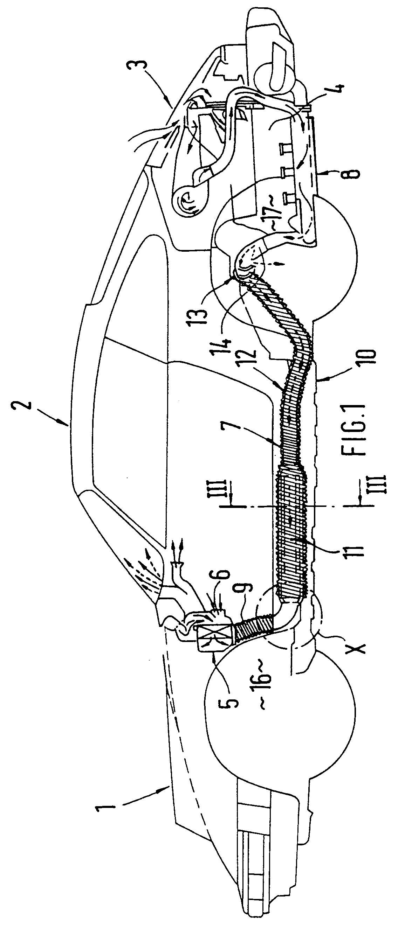

Fig. 1 zeigt ein Kraftfahrzeug 1 (Personenwagen) mit einem Aufbau 2 und einer im Heck 3 angeordneten luftgekühlten Brennkraftmaschine 4. Eine Heizungsanlage 5 des Kraftfahrzeuges 1 umfaßt ein benachbart eines Fahrgastraumes angeordnetes Heiz- und/oder Klimagerät 6, das über einen Heizungsstrang 7 mit einem benachbart der Brennkraftmaschine 4 angeordneten Abgaswärmetauscher 8 verbunden ist.

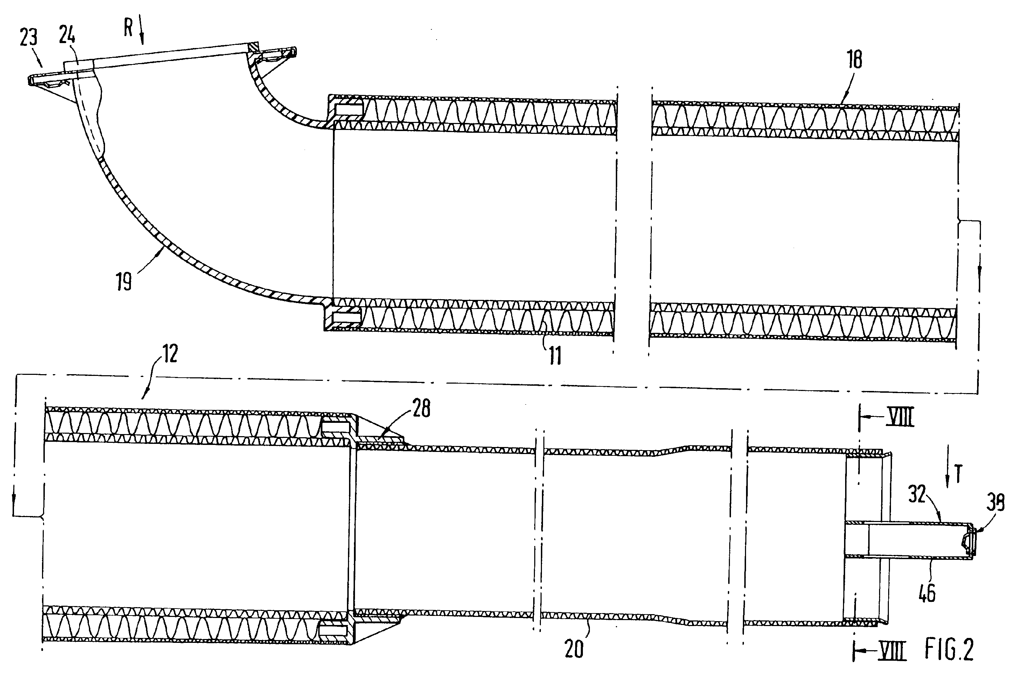

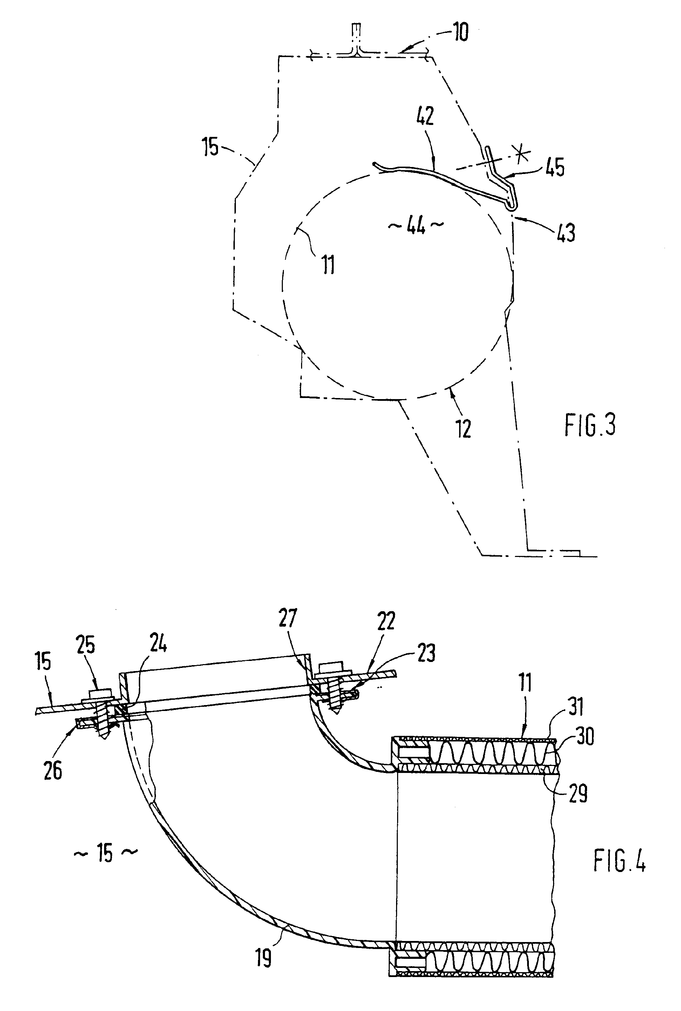

Der Heizungsstrang 7 setzt sich gemäß den Fig. 1 und 2 aus einem vorderen Verbindungsschlauch 9, einer innerhalb von trägerartigen Aufbauteilen 10 verlaufenden, mit einem Schalldämpfer 11 versehenen Heizleitung 12, einem außerhalb des Aufbauteiles 10 angeordneten Klappenkasten 13 und einem hinteren Verbindungsrohr 14 zusammen. Entsprechend Fig. 3 verläuft die Heizleitung 12 innerhalb eines seitlich außenliegenden Fahrzeuglängsträgers 15, der sich etwa von einem vorderen Radhaus 16 bis zu einem hinteren Radhaus 17 erstreckt. Im vorderen Bereich wird der Fahrzeuglängsträger 15 durch einen Schweller, im hinteren Bereich durch einen Träger III gebildet. Kurz vor dem hinteren Radhaus 17 ist der Fahrzeuglängsträger 15 nach innen und nach oben hin abgekröpft.

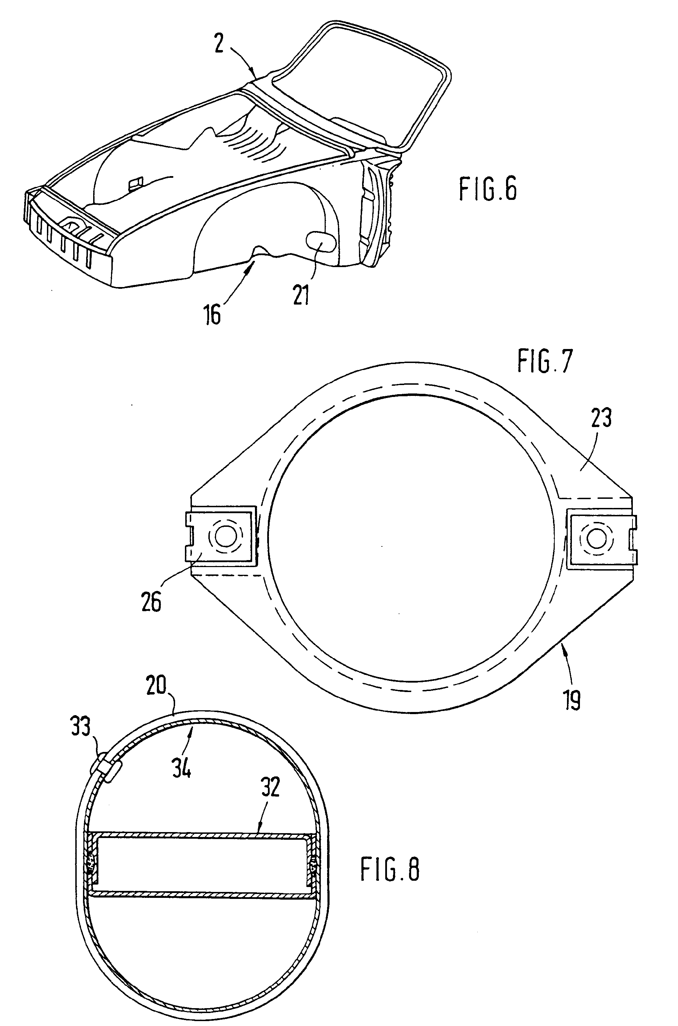

Erfindungsgemäß wird die innerhalb des Fahrzeuglängsträgers 15 untergebrachte Heizleitung 12 durch ein vorgefertigtes, flexibles Montageteil 18 gebildet, das aus einem vorderen Rohrkrümmer 19, dem wellrohrartig ausgebildeten Schalldämpfer 11 und einem anschließenden Wellrohrschlauch 20 besteht (Fig. 2). Dieses Montageteil 18 wird nach der Oberflächenbehandlung des Kraftfahrzeuges (Rohkarosserie) durch eine im vorderen Radhaus 16 vorgesehene Montageöffnung 21 von vorne nach hinten durch das Aufbauteil 10 hindurchgezogen und anschließend an beiden Enden mit angrenzenden Bauteilen der Heizungsanlage 5 bzw. des Aufbaus 2 verbunden (Fig. 6). Der vordere Rohrkrümmer 19 verbindet den etwa horizontal ausgerichteten Schalldämpfer 11 mit einer oberen Begrenzungswand 22 des Fahrzeuglängsträgers 15. Der bis etwa 150° C wärmebeständige Rohrkrümmer 19 ist aus Kunststoff hergestellt und mit dem vorderen Ende des Schalldämpfers 11 durch Kleben verbunden. Ein endseitiger Anlageflansch 23 des Rohrkrümmers 19 ist unter Zwischenschaltung einer Dichtung 24 von unten an die obere Begrenzungswand 22 des Fahrzeuglängsträgers 15 herangeführt und mittels Schrauben 25 (Blechschrauben) am Fahrzeuglängsträger 15 befestigt. Die Schrauben 25 werden von oben durch Durchgangsöffnungen des Fahrzeuglängsträgers 15 und des Anlageflansches 23 hindurchgesteckt und in Blechmuttern 26 eingedreht, die örtlich auf den Anlageflansch 23 des Rohrkrümmers 19 aufgesteckt sind (Fig. 7). Im Anschlußbereich des Rohrkrümmers 19 an die Begrenzungswand 22 weist diese einen nach oben gerichteten, rohrförmigen Anschlußstutzen 27 auf. Auf diesen ist der ebenfalls wellrohrartig ausgebildete Verbindungsschlauch 9 aufgesteckt und mittels einer - nicht näher dargestellten - Rohrschelle in Lage gehalten. Der Verbindungsschlauch 9 erstreckt sich zwischen dem Anschlußstutzen 27 und dem Heiz- und/oder Klimagerät 6.

Der Schalldämpfer 11 und der Wellrohrschlauch 20 sind bei 28 miteinander verklebt. Gemäß Fig. 4 besteht der Schalldämpfer 11 von innen nach außen aus einem perforierten, gewickelten Alu-Rohr 29, einer Mineralfaser-Absorptionsschicht 30 und einem Papier-Aluminium-Papier-Außenrohr 31. Der Wellrohrschlauch 20 ist als dreilagiger Alupapierschlauch ausgebildet. Die Heizleitung 12 mit dem integrierten Schalldämpfer 11 wird durch die Montageöffnung 21 im vorderen Radhaus 16 mittels eines - nicht näher dargestellten - Stahlseiles durch den Fahrzeuglängsträger 15 hindurchgezogen. Dies ist nur möglich, da die Heizleitung 12 mit dem Schalldämpfer 11 flexibel ausgeführt ist.

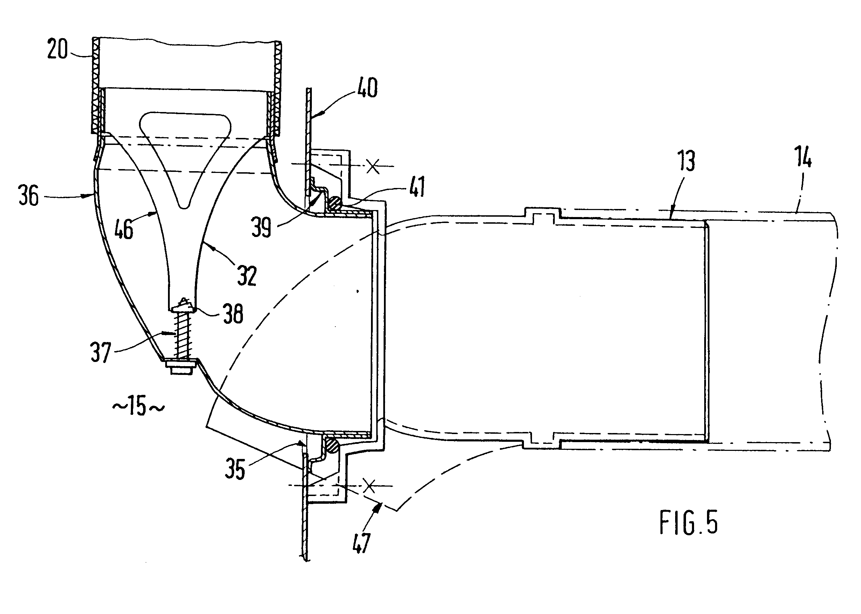

Das Stahlseil wird vor der Montage in die Fahrzeuglängsträger 15 eingeführt und ist mit einem hinteren Endstutzen 32 des Wellrohrschlauches 20 lösbar verbunden. Der Wellrohrschlauch 20 und ein mit diesem durch einen Niet 33 verbundener, ringförmiger Abschnitt 34 des Endstutzens 32 weisen einen ovalen Formverlauf auf (Fig. 8). Gemäß Fig. 5 ragt ein etwa U-förmiger Bügel 46 des Endstutzens 32 aus dem Wellrohrschlauch 20 hervor.

Der Wellrohrschlauch 20 wird soweit durch eine seitliche Öffnung 35 des Fahrzeuglängsträgers 15 hindurchgezogen, bis ein Verschrauben des Endstutzens 32 mit einem Übergangsstück 36 möglich ist. Die von außen eingesetzte Schraube 37 wird in eine Blechmutter 38 des Endstutzens 32 eingedreht. Anschließend wird das Übergangsstück 36 mit dem Wellrohrschlauch 20 abschnittsweise wieder in den Fahrzeuglängsträger 15 zurückgeschoben, und zwar soweit, bis sich ein radialer Stützring 39 des Übergangsstückes 36 von außen an einer vertikalen Wand 40 des Fahrzeuglängsträgers 15 abstützt. Der Stützring 39 umgibt die seitliche Öffnung 35 des Fahrzeuglängsträgers 15. Danach wird der Klappenkasten 13 unter Zwischenschaltung eines Dichtkörpers 41 auf das Übergangsstück 36 aufgeschoben und am Fahrzeuglängsträger 15 befestigt. Dies erfolgt mittels Schrauben. Der Klappenkasten 13 umfaßt eine nicht näher dargestellte, differenzdruckgesteuerte Klappe, so daß die vom Abgaswärmetauscher 8 strömende Heizluft entweder nach vorne durch den Heizungsstrang 7 zum Heizgerät 6 gelangt oder aber durch eine Abströmöffnung 47 im Bereich des hinteren Radhauses 17 ins Freie abgeleitet wird.

Der Klappenkasten 13 ist über das hintere Verbindungsrohr 14 an den Abgaswärmetauscher 8 angeschlossen. Das hintere Verbindungsrohr 14 kann entweder starr oder flexibel ausgebildet sein. Damit der Schalldämpfer 11 im Fahrzeuglängsträger 15 lagegesichert ist, werden seitlich Federklammern 42 durch den Fahrzeuglängsträger 15 eingeschoben, die den Schalldämpfer 11 abschnittsweise umgreifen. Die Federklammern 42 werden durch Schlitzöffnungen 43 des Fahrzeuglängsträgers 15 abschnittsweise in den Trägerinnenraum 44 eingesteckt. Ein außerhalb des Fahrzeuglängsträgers 15 verlaufender Abschnitt 45 der Federklammer 42 liegt an der Außenseite des Fahrzeuglängsträgers 15 an und wird in geeigneter Weise - beispielsweise durch Schrauben - befestigt (Fig. 3). Nach der Montage der Heizleitung 12 wird die Montageöffnung 21 im vorderen Radhaus 16 mittels einer nicht näher dargestellten Tülle oder einer Abdeckung verschlossen.

**Patentansprüche**

1. Heizungsanlage für ein Kraftfahrzeug (1) mit einem vorzugsweise luftgekühlten Heckmotor, wobei eine mit einem Schalldämpfer (11) versehene Heizleitung (12) eines Heizungsstrangs innerhalb von Aufbauteilen des Kraftfahrzeuges verläuft, dadurch gekennzeichnet, daß die Heizleitung (12) mit dem integrierten Schalldämpfer (11) durch ein vorgefertigtes, flexibles Montageteil (18) gebildet wird, das nach der Oberflächenbehandlung des Kraftfahrzeugs (1) durch eine in einem vorderen Radhaus (16) vorgesehene Montageöffnung (21) in das Aufbauteil (10) eingesetzt und endseitig mit angrenzenden Bauteilen (9, 36) der Heizungsanlage (5) bzw. des Aufbaus (2) verbunden ist.

2. Heizungsanlage nach Anspruch 1, dadurch gekennzeichnet, daß die Heizleitung (12) abschnittsweise innerhalb eines seitlich außenliegenden Fahrzeuglängsträgers (15) verläuft.

3. Heizungsanlage nach Anspruch 1, dadurch gekennzeichnet, daß sich das flexible Montageteil (18) aus einem vorderen Rohrkrümmer (19), dem wellrohrartig ausgebildeten Schalldämpfer (11) und einem hinteren Wellrohrschlauch (20) zusammensetzt.

4. Heizungsanlage nach Anspruch 2, dadurch gekennzeichnet, daß der aus Kunststoff bestehende Rohrkrümmer (19) mit dem Schalldämpfer (11) verklebt ist.

5. Heizungsanlage nach Anspruch 2, dadurch gekennzeichnet, daß ein endseitiger Anlageflansch (23) des Rohrkrümmers (19) unter Zwischenschaltung einer Dichtung (24) von unten gegen eine etwa horizontal ausgerichtete, obere Begrenzungswandung (22) des Fahrzeuglängsträgers (15) herangeführt und mit dieser verschraubt ist.

6. Heizungsanlage nach Anspruch 5, dadurch gekennzeichnet, daß an der oberen Begrenzungswandung (22) im Bereich des Anlageflansches (23) ein nach oben gerichteter Anschlußstutzen (27) zum Befestigen eines zum Heizgerät (6) führenden Verbindungsschlauches (9) vorgesehen ist.

7. Heizungsanlage nach Anspruch 1, dadurch gekennzeichnet, daß ein hintenliegendes, freies Ende des Wellrohrschlauches (20) einen vorstehenden Endstutzen (32) aufweist, wobei der Endstutzen (32) außerhalb des Fahrzeuglängsträgers (15) mit einem hinteren Übergangsstück (36) verbunden wird und daß anschließend das hintere Übergangsstück (36) abschnittsweise in eine trägerseitige Öffnung (35) eingeschoben und mittels eines angrenzenden Klappenkastens (13) am Fahrzeuglängsträger (15) fixiert wird.

8. Heizungsanlage nach Anspruch 6, dadurch gekennzeichnet, daß ein aus dem Wellrohrschlauch (20) herausragender, etwa U-förmiger Bügel (46) des Endstutzens (32) mit dem hinteren Übergangsstück (36) verschraubt ist.

9. Heizungsanlage nach Anspruch 7, dadurch gekennzeichnet, daß das Übergangsstück (36) an seinem dem Klappenkasten (13) zugekehrten Ende einen radialen Stützring (39) aufweist, der an der Außenseite der vertikalen Wand (40) des Fahrzeuglängsträgers (15) benachbart der Öffnung (35) anliegt.

10. Heizungsanlage nach Anspruch 7, dadurch gekennzeichnet, daß der Klappenkasten (13) unter Zwischenschaltung eines Dichtkörpers (41) auf das eine Ende des Übergangsstücks (36) aufgesetzt und am Fahrzeuglängsträger (15) befestigt ist.

11. Heizungsanlage nach Anspruch 1, dadurch gekennzeichnet, daß zur Fixierung des Schalldämpfers (11) örtlich eine Federklammer (42) vorgesehen ist, die durch eine Schlitzöffnung (43) des Fahrzeuglängsträgers (15) eingeführt ist und den Schalldämpfer (11) abschnittsweise umgibt.

12. Heizungsanlage nach Anspruch 1, dadurch gekennzeichnet, daß das vorgefertigte Montageteil (18) mittels eines Stahlseiles von vorne nach hinten durch den Fahrzeuglängsträger (15) hindurchgezogen wird, wobei das Stahlseil am hinteren Endstutzen (32) lösbar eingehängt ist.


## Claims

1. A heating system for a motor vehicle (1) with a preferably air-cooled rear engine, a heating pipe (12) of a heating line provided with a silencer (11) extending inside body parts of the motor vehicle, characterized in that the heating pipe (12) together with the integrated silencer (11) is formed by a pre-fabricated flexible assembly part (18) which is inserted after the surface treatment of the motor vehicle (1) into the body part (10) through an assembly opening (21) provided in a front wheel housing (16) and which is connected at its ends to adjacent components (9, 10) of the heating system (5) and the body (2) respectively.

2. A heating system according to Claim 1, characterized in that the heating pipe (12) extends in part inside a longitudinal support (15) of the vehicle lying laterally on the outside.

3. A heating system according to Claim 1, characterized in that the flexible assembly part (18) is formed by the front pipe bend (19), the silencer (11) constructed in the manner of a corrugated tube, and a rear corrugated tube (20).

4. A heating system according to Claim 2, characterized in that the pipe bend (19) consisting of plastics material is glued to the silencer (11).

5. A heating system according to Claim 2, characterized in that an abutment flange (23) at the end of the pipe bend (19) is brought up from below against a substantially horizontally orientated upper boundary wall (22) of the longitudinal support (15) of the vehicle with the interposition of a seal (24).

6. A heating system according to Claim 5, characterized in that an upwardly orientated connexion socket (27) is provided in the region of the abutment flange (23) on the upper boundary wall (22) in order to fasten a connexion tube (9) leading to the heating appliance (6).

7. A heating system according to Claim 1, characterized in that a free end of the corrugated tube (20) lying towards the rear comprises a projecting end socket (32), the end socket (32) being connected outside the longitudinal support (15) of the vehicle to a rear transition member (36), and the rear transition member (36) subsequently being partly inserted into an opening (35) at the support end and being fixed to the longitudinal support (15) of the vehicle by means of an adjacent flap case (13).

8. A heating system according to Claim 6, characterized in that a substantially U-shaped bracket (46) of the end socket (32) projecting out of the corrugated tube (20) is screwed to the rear transition member (36).

9. A heating system according to Claim 7, characterized in that the end of the transition member (36) facing the flap case (13) has a radial support ring (39) resting on the outside of the vertical wall (40) of the longitudinal support (15) of the vehicle adjacent to the opening (35).

10. A heating system according to Claim 7, characterized in that the flap case (13) is mounted on one end of the transition member (36) with the interposition of a sealing member (41) and is secured to the longitudinal support (15) of the vehicle.

11. A heating system according to Claim 1, characterized in that a spring clip (42) inserted through a slot opening (43) in the longitudinal support (15) of the vehicle and partly surrounding the silencer (11) is provided for fixing the silencer (11) locally.

12. A heating system according to Claim 1, characterized in that the pre-fabricated assembly part (18) is pulled towards the rear from the front through the longitudinal support (15) of the vehicle by means of a steel cable, the steel cable being detachably suspended on the rear end socket (32).

**Revendications**

1. Dispositif de chauffage pour un véhicule automobile (1) comportant un moteur arrière, de préférence refroidi à l'air, dans lequel une conduite de chauffage (12), dotée d'un silencieux (11), d'un circuit de chauffage, passe à l'intérieur d'éléments de la carrosserie du véhicule, caractérisé en ce que la conduite de chauffage (12) avec le silencieux (11) intégré est formée par un élément de montage (18) flexible, préfabriqué, qui, après traitement de surface du véhicule (1), est inséré, par une ouverture de montage (21) prévue dans un logement de roue (16) avant, dans l'élément de carrosserie (10) et est relié à ses extrémités, avec des composants (9, 36) adjacents du dispositif de chauffage (5) ou de la carrosserie (2).

2. Dispositif de chauffage selon la revendication 1, caractérisé en ce que la conduite de chauffage (12) s'étend sur certaines parties à l'intérieur d'un longeron (15) du véhicule situé latéralement à l'extérieur.

3. Dispositif de chauffage selon la revendication 1, caractérisé en ce que l'élément de montage (18) flexible se compose d'un tube coudé (19) avant, du silencieux (11) en tube ondulé et d'un tuyau ondulé (20) arrière.

4. Dispositif de chauffage selon la revendication 2, caractérisé en ce que le tube coudé (19) en matière plastique est collé avec le silencieux (11).

5. Dispositif de chauffage selon la revendication 2, caractérisé en ce qu'une bride d'application (23) terminale du tube coudé (19) est amenée, avec organe d'étanchéité (24) intercalé, à partir du bas, contre une paroi de délimitation (22) supérieure, dirigée à peu près horizontalement, du longeron (15) du véhicule et est vissée avec celui-ci.

6. Dispositif de chauffage selon la revendication 5, caractérisé en ce qu'il est prévu sur la paroi de délimitation (22) supérieure, dans la région de la bride d'application (23), une tubulure de raccordement (27), dirigée vers le haut pour fixer un tuyau de liaison (9) menant à l'appareil de chauffage (6).

7. Dispositif de chauffage selon la revendication 1, caractérisé en ce qu'une extrémité libre arrière du tuyau ondulé (20) comporte une tubulure terminale (32) saillante, celle-ci étant reliée, à l'extérieur du longeron (15) du véhicule, à une pièce de transition (36) arrière et en ce qu'ensuite, la pièce de transition (36) arrière est en partie introduite dans une ouverture (35) côté poutre et est fixée sur le longeron (15) du véhicule, au moyen d'une boîte à volets (13) adjacente.

8. Dispositif de chauffage selon la revendication 6, caractérisé en ce qu'un étrier (46) à peu près en U, ressortant du tuyau ondulé (20), de la tubulure terminale (32), est vissé avec la pièce de transition (36) arrière.

9. Dispositif de chauffage selon la revendication 7, caractérisé en ce que la pièce de transition (36) comporte, à son extrémité tournée vers la botte à volets (13), une bague d'appui (39) radiale qui s'applique contre le côté extérieur de la paroi verticale (40) du longeron (15) du véhicule, à proximité de l'ouverture (35).

10. Dispositif de chauffage selon la revendication 7, caractérisé en ce que la boîte à volets (13) est placée, avec un corps d'étanchéité (41) intercalé, sur une extrémité de la pièce de transition (36) et est fixée sur le longeron (15) du véhicule.

11. Dispositif de chauffage selon la revendication 1, caractérisé en ce que pour fixer le silencieux (11) il est prévu localement une agrafe à ressort (42) qui est introduite à travers une ouverture en fente (43) du longeron (15) du véhicule et qui entoure en partie le silencieux (11).

12. Dispositif de chauffage selon la revendication 1, caractérisé en ce que l'élément de montage (18) préfabriqué est tiré de l'avant vers l'arrière, à travers le longeron (15) du véhicule, au moyen d'un filin d'acier, celui-ci étant accroché de manière amovible à la tubulure terminale (32) arrière.

FIG.1

FIG.2

FIG.3

~ 15 ~

FIG.4

FIG.5

FIG.6

FIG.7

FIG.8